(19) Europäisches Patentamt
European Patent Office
Office européen des brevets

(11) **EP 4 249 182 A1**

(12) **DEMANDE DE BREVET EUROPEEN**

(43) Date de publication:
**27.09.2023 Bulletin 2023/39**

(21) Numéro de dépôt: **23163922.0**

(22) Date de dépôt: **24.03.2023**

(51) Classification Internationale des Brevets (IPC):
**B25J 9/16** (2006.01)

(52) Classification Coopérative des Brevets (CPC):
**B25J 9/1633;** G05B 2219/39319; G05B 2219/39322

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **25.03.2022 FR 2202707**

(71) Demandeur: **Staubli Faverges**
**74210 Faverges-Seythenex (FR)**

(72) Inventeur: **JOLY, Luc**
**74210 Faverges-Seythenex (FR)**

(74) Mandataire: **Lavoix**
**62, rue de Bonnel**
**69448 Lyon Cedex 03 (FR)**

(54) **SYSTÈMES ET PROCÉDÉS DE COMMANDE HYBRIDE POSITION FORCE D'UN ROBOT INDUSTRIEL**

(57) Ce procédé de commande d'un robot industriel comporte des étapes consistant à :
▪ calculer (S104) une consigne composite dépendant du temps et définissant des efforts et/ou des vitesses articulaires, en fonction d'une trajectoire cible et d'un mode de fonctionnement,
▪ calculer (S106) une matrice de comportement qui décrit un comportement désiré du bras de robot, en définissant des directions dans lesquelles la consigne composite calculée doit s'appliquer,
▪ calculer (S108) une consigne d'effort articulaire de pilotage des modules de régulation d'axe et calculer la dérivée temporelle d'un état interne homogène à une position articulaire.
La consigne d'effort articulaire de pilotage des modules de régulation d'axe est calculée à partir d'une fonction de régulation qui régule l'écart entre la position articulaire et l'état interne déterminé par intégration de ladite dérivée temporelle de l'état interne.

FIG.1

EP 4 249 182 A1

**Description**

DOMAINE TECHNIQUE

La présente invention concerne les robots industriels, et porte plus particulièrement sur des systèmes et des procédés de commande d'un robot industriel manuellement guidable.

ARRIERE-PLAN TECHNOLOGIQUE

Les robots industriels, tels que les bras de robot, sont de plus en plus utilisés dans des applications de collaboration directe avec des opérateurs, dans lesquels les opérateurs peuvent agir directement sur le robot. C'est par exemple le cas d'applications chirurgicales, ou de certains procédés de fabrication industrielle, entre autres.
Par exemple, l'opérateur peut agir directement sur le robot en manipulant et en déplaçant une partie du bras de robot. Ce déplacement est détecté par des capteurs du robot. En fonction de ce retour, le système de commande du robot modifie en conséquence des consignes envoyées aux moteurs du robot, par exemple pour amener ou maintenir le bras de robot à la position choisie par l'opérateur, ou pour accompagner un déplacement manuel du robot par l'opérateur.
Généralement, la performance du guidage « manuel » d'un robot peut être mesurée par différents critères, tels que la facilité avec laquelle le robot peut être déplacé (la transparence), l'absence d'élasticité sous l'action de l'opérateur (la rigidité) et la stabilité, qui s'évalue lorsque que le robot atteint une position limite imposée par programmation ou par l'utilisateur.
Aucune des solutions de contrôle de robot disponibles et connues à l'heure actuelle ne permet d'obtenir des résultats qui satisfassent ces trois critères, qui sont souvent difficiles à concilier.
En effet, en pratique, un robot présentant une rigidité et une transparence satisfaisantes présentera une stabilité insuffisante, car il sera sujet à des rebonds lorsqu'il rentrera en contact avec un élément rigide de son environnement sous l'action d'un opérateur, par exemple.
Il existe donc un besoin pour des systèmes et des procédés de commande de robots industriels permettant un guidage qui présente des performances améliorées lorsque le robot doit être guidé manuellement au moins partiellement.

RESUME DE L'INVENTION

Selon un aspect, l'invention concerne un procédé de commande d'un robot industriel, le robot comportant :

un bras de robot multiaxes comprenant au moins deux actionneurs électriques chacun capable de déplacer une partie du bras de robot par rapport à une autre partie du bras de robot autour ou le long d'un axe de mouvement, chaque actionneur électrique étant associé à un capteur configuré pour mesurer une position articulaire de l'actionneur correspondant,
un système de commande de robot comportant des modules de régulation d'axe configurés pour calculer les consignes de pilotage d'unités de puissance qui délivrent un courant électrique approprié aux actionneurs en fonction d'une consigne d'effort articulaire, et un module de calcul configuré pour déterminer des consignes d'effort articulaires pour les modules de régulation d'axe, le module de calcul étant raccordé aux modules de régulation d'axe,

dans lequel le procédé de commande comporte des étapes consistant à :

calculer une consigne composite dépendant du temps et définissant des efforts et/ou des vitesses articulaires, en fonction d'une trajectoire cible et d'un mode de fonctionnement,
calculer une matrice de comportement qui décrit un comportement désiré du bras de robot, en définissant des directions dans lesquelles la consigne composite calculée doit s'appliquer, la matrice de comportement étant exprimée dans l'espace articulaire,
calculer une consigne d'effort articulaire de pilotage des modules de régulation d'axe et calculer une dérivée temporelle d'un état interne homogène à une position articulaire et distinct des positions articulaires mesurées, le calcul de la consigne d'effort articulaire de pilotage des modules de régulation d'axe et de la dérivée temporelle étant chacun réalisé en fonction de ladite consigne composite précédemment calculée, de ladite matrice de comportement précédemment calculée, des positions articulaires mesurées, de vitesses articulaires dérivées à partir des positions articulaires mesurées, et de l'état interne précédemment calculé,

dans lequel la consigne d'effort articulaire de pilotage des modules de régulation d'axe est calculée à partir d'une fonction de régulation qui régule un écart entre la position articulaire et l'état interne, l'état interne étant déterminé par intégration de ladite dérivée temporelle de l'état interne.

Dans certains modes de réalisation, la fonction de régulation est un régulateur proportionnel, dérivée et intégral.

Dans certains modes de réalisation, la consigne d'effort articulaire et la dérivée temporelle de l'état interne sont des solutions du système d'équations différentielles suivant

$$\begin{cases} \dot{q}_{mv} = u - Y\left(K_p(q_{mv} - q_r) + K_i \int (q_{mv} - q_r)dt - K_d\dot{q}_r\right) \\ \tau = K_p(q_{mv} - q_r) + K_i \int (q_{mv} - q_r)dt + K_d(\dot{q}_{mv} - \dot{q}_r) \end{cases}$$

où $q_{mv}$ est la fonction correspondant audit état interne, $\dot{q}_{mv}$ est la dérivée temporelle de l'état interne $q_{mv}$, $\tau$ est la consigne d'effort articulaire, Y est la matrice de comportement et u est ladite consigne composite et où Kp, Ki, et Kd sont des matrices de gains.

Dans certains modes de réalisation, les actionneurs électriques comportent des moteurs électriques sans balais et les modules de régulation d'axe sont configurés pour calculer le courant d'alimentation des actionneurs en fonction de leur position articulaire mesurée par le capteur correspondant.

Dans certains modes de réalisation, le module de régulation d'axe prend en compte des efforts extérieurs multidimensionnels mesurés par un capteur d'efforts multiaxes pour calculer les consignes de pilotage d'unités de puissance.

Dans certains modes de réalisation, le robot comporte un effecteur placé à l'extrémité du bras de robot et le module de calcul comporte un compensateur de gravité qui calcule le poids de l'effecteur et un convertisseur cartésien articulaire qui calcule la matrice de conversion articulaire à partir des positions articulaires et transmet le poids de l'effecteur et la matrice de conversion articulaire au module de régulation d'axe pour la prise en compte des efforts extérieurs multidimensionnels mesurés par un capteur d'efforts multiaxes monté en extrémité du bras de robot.

Dans certains modes de réalisation, le module de calcul calcule la consigne composite et la matrice de comportement avec une première fréquence et calcule les consignes d'effort articulaire de pilotage des modules de régulation d'axe avec une deuxième fréquence supérieure à la première fréquence.

Dans certains modes de réalisation, la deuxième fréquence est entre deux et vingt fois plus élevée que la première fréquence, de préférence entre cinq et dix fois plus élevée que la première fréquence, de préférence encore huit fois plus élevée que la première fréquence.

Dans certains modes de réalisation, le module de calcul comporte un compensateur de gravité qui calcule le poids de l'effecteur et un convertisseur cartésien articulaire qui calcule la matrice de conversion articulaire à partir des positions articulaires et transmet le poids de l'effecteur et la matrice de conversion articulaire au module de régulation d'axe pour la prise en compte des efforts mesurés par un capteur d'efforts multiaxes monté en extrémité du bras de robot à la première fréquence.

Dans certains modes de réalisation, une unité centrale implémente le calcul de la consigne composite et la matrice de comportement et dans lequel une unité auxiliaire implémente le calcul des consignes d'effort articulaires et le module de régulation d'axe, l'unité centrale et l'unité auxiliaire étant en communication au moyen d'un bus de données.

Dans certains modes de réalisation, les actionneurs électriques comportent des moteurs électriques sans balais et une unité centrale implémente le calcul de la consigne composite et la matrice de comportement, le calcul des consignes d'effort articulaires et le calcul des consignes de pilotage des boucles de courant par des boucles d'effort et de vitesse et une pluralité d'amplificateurs en communication avec l'unité centrale est apte à alimenter en courant les moteurs en fonction des consignes pilotage des boucles de courant.

Dans certains modes de réalisation, le calcul de la consigne composite et de la matrice de comportement prend en compte l'état interne.

Selon un autre aspect, l'invention concerne un système de commande d'un robot industriel, le robot comportant :

un bras de robot multiaxes comprenant au moins deux actionneurs électriques chacun capable de déplacer une partie du bras de robot par rapport à une autre partie du bras de robot autour ou le long d'un axe de mouvement, chaque actionneur électrique étant associé à un capteur configuré pour mesurer une position articulaire de l'actionneur correspondant,

le système de commande de robot comportant des modules de régulation d'axe configurés pour calculer les consignes de pilotage d'unités de puissance qui délivrent un courant électrique approprié aux actionneurs en fonction d'une consigne d'effort articulaire, et un module de calcul configuré pour déterminer des consignes d'effort articulaires pour les modules de régulation d'axe, le module de calcul étant raccordé aux modules de régulation d'axe,

le système de commande comportant des modules configurés pour :

calculer une consigne composite dépendant du temps et définissant des efforts et/ou des vitesses articulaires, en fonction d'une trajectoire cible et d'un mode de fonctionnement,

calculer une matrice de comportement qui décrit un comportement désiré du bras de robot, en définissant des directions dans lesquelles la consigne composite calculée doit s'appliquer, la matrice de comportement étant exprimée dans l'espace articulaire,

calculer une consigne d'effort articulaire de pilotage des modules de régulation d'axe et calculer une dérivée temporelle d'un état interne homogène à une position articulaire et distinct des positions articulaires mesurées, le calcul de la consigne d'effort articulaire de pilotage des modules de régulation d'axe et de la dérivée temporelle étant chacun réalisé en fonction de ladite consigne composite précédemment calculée, de ladite matrice de comportement précédemment calculée, des positions articulaires mesurées, de vitesses articulaires dérivées à partir des positions articulaires mesurées, et de l'état interne précédemment calculé,

dans lequel la consigne d'effort articulaire de pilotage des modules de régulation d'axe est calculée à partir d'une fonction de régulation qui régule un écart entre la position articulaire et l'état interne, l'état interne étant déterminé par intégration de ladite dérivée temporelle de l'état interne.

Selon un autre aspect, l'invention concerne un robot industriel comportant un tel système de commande d'un robot industriel, apte à mettre en oeuvre les procédés selon l'invention.

BREVE DESCRIPTION DES FIGURES

L'invention sera mieux comprise et d'autres avantages de celle-ci apparaîtront plus clairement à la lumière de la description qui va suivre, donnée uniquement à titre d'exemple et faite en référence aux dessins annexés, dans lesquels :

[Fig 1] la figure 1 représente schématiquement et en blocs structurels un robot industriel selon l'invention conformément à un premier mode de réalisation ;

[Fig 2] la figure 2 est un schéma bloc fonctionnel du robot industriel de la figure 1 conformément au premier mode de réalisation ;

[Fig 3] la figure 3 est un schéma fonctionnel synthétique illustrant le système de commande conforme à l'invention ;

[Fig 4] la figure 4 est un schéma bloc illustrant la communication de données entre unités du robot ;

[Fig 5] la figure 5 est un schéma fonctionnel détaillant les boucles d'effort et de vitesses ;

[Fig 6] la figure 6 représente schématiquement un procédé de commande d'un robot industriel conformément à des modes de réalisation de l'invention ;

[Fig 7] la figure 7 est un schéma bloc structurel d'un robot industriel conformément à un deuxième mode de réalisation ;

[Fig 8] la figure 8 est un schéma bloc fonctionnel du robot industriel de la figure 7 conformément au deuxième mode de réalisation.

DESCRIPTION DETAILLEE DE MODES DE REALISATION DE L'INVENTION

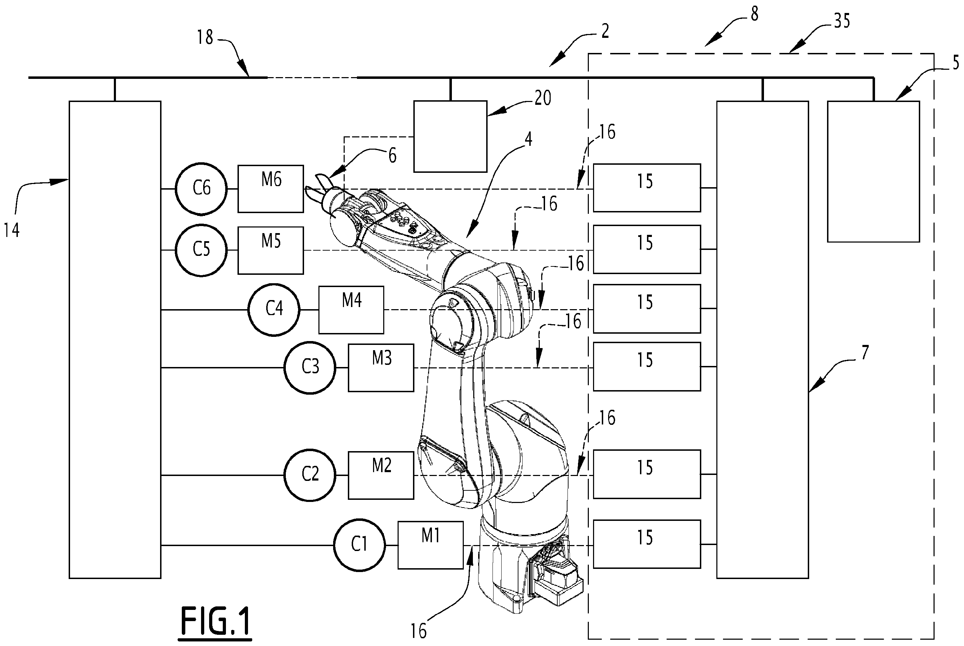

La figure 1 représente un exemple de robot industriel 2.

Le robot 2 comporte un bras de robot multiaxes 4. Par exemple, le bras de robot 4 comporte plusieurs segments articulés deux à deux autour d'axes de rotation.

Le bras de robot 4 peut comporter un effecteur 6, tel qu'un outil pilotable, qui est placé en bout du bras de robot 4.

Le bras de robot 4 comporte une pluralité d'actionneurs électriques, notés M1, M2, M3, M4, M5 et M6 sur l'exemple de la figure 1 (et notés M1 à M6 dans ce qui suit). Chacun des actionneurs électriques est capable de déplacer par rotation ou par translation une partie du bras de robot 4 par rapport à une autre partie du bras de robot 4 autour d'un axe de mouvement, tels qu'un des axes de rotation.

Chaque actionneur électrique M1 à M6 comporte un moteur électrique, tels que des moteurs électriques synchrones sans balais, ou tout autre moteur électrique adapté.

Le robot 2 comporte aussi une pluralité de capteurs, notés C1, C2, C3, C4, C5 et C6 sur l'exemple de la figure 1 (et notés C1 à C6 dans ce qui suit).

Chaque actionneur électrique M1 à M6 est associé à un capteur C1 à C6. Chaque capteur C1 à C6 est configuré pour mesurer une position articulaire de cet actionneur électrique. Par exemple, les capteurs C1 à C6 sont des capteurs d'angle, tels que des codeurs rotatifs. La position articulaire correspond par exemple à une position angulaire de l'articulation.

De préférence, le robot 2 est un robot à 6 axes. Le bras de robot 4 présente donc six degrés de liberté et comporte six actionneurs électriques M1 à M6 et six capteurs C1 à C6.

Le robot 2 comporte également un système de commande 8.

Dans un premier mode de réalisation illustré sur les figures 1, 2 et 3, le système de commande 8 comporte:

- une unité centrale 5,
- une unité auxiliaire 7, et
- 6 unités de puissance 15.

Au sens de la présente description, le qualificatif « articulaire » est utilisé pour désigner soit la position (angulaire) de chaque articulation du bras de robot 4, soit la position (angulaire) courante de chaque actionneur M1 à M6 du robot. L'expression « efforts articulaires » désigne les efforts commandés sur chaque articulation du bras de robot, ou sur chaque actionneur M1 à M6.

De manière classique, une position spatiale est définie soit dans un espace cartésien, soit dans l'espace articulaire, dans lequel sont exprimées les positions articulaires de chaque articulation du bras de robot.

Dans cette description, on désigne par « effort » une force ou un couple mécanique.

L'unité centrale 5 est en communication avec l'unité auxiliaire 7 par une liaison de données tel qu'un bus de données 18, notamment un bus de terrain.

En pratique, l'unité auxiliaire 7 est connecté électriquement à des unités de puissance 15 qui délivrent un courant électrique approprié aux actionneurs M1 à M6 par l'intermédiaire de conducteurs électriques 16.

L'unité de puissance 15 est un dispositif comprenant des interrupteurs commandables couplés à une alimentation et apte à générer les courants dans les phases d'un moteur en fonction de signaux de commande des interrupteurs appelés consignes de pilotage d'unité de puissance. Il comprend des capteurs de mesure des courants de phase des moteurs. Ces mesures de courants sont transmises à l'asservissement en courant de manière à adapter le pilotage des interrupteurs commandables de l'unité de puissance 15 par rétroaction.

Le système de commande 8 comporte également une interface d'acquisition de données 14, telle qu'une carte électronique. L'interface d'acquisition de données 14 est connectée aux capteurs C1 à C6 et est configurée pour recevoir les données mesurées par les capteurs C1 à C6.

Par exemple, les capteurs C1 à C6 sont connectés à l'interface d'acquisition 14 par des liaisons de communication compatibles avec un protocole de communication industriel, tel que le protocole EnDat, ou équivalent.

L'interface d'acquisition de données 14 est connectée à l'unité centrale 5 et à l'unité auxiliaire 7 par une liaison de données tel qu'un bus de données 18, notamment un bus de terrain.

De préférence, le bus de données 18 est compatible avec le protocole de communication EtherCAT (Ethernet for Control Automation Technology).

Les constituants du système de commande 8 peuvent avantageusement être regroupés dans une armoire de commande. En alternative, l'interface de d'acquisition de données 14 peut être placée dans le bras de robot comme les actionneurs M1 à M6 et les capteurs C1 à C6. L'unité centrale 5, l'unité auxiliaire 7 et les unités de puissance 15 peuvent être placés dans une armoire de commande 35 visible en pointillés sur la figure 1.

Optionnellement, un capteur d'efforts multiaxes 20 placé sur le bras de robot 4 peut être connecté à l'unité centrale 5 et à l'unité auxiliaire 7, par exemple par l'intermédiaire du bus de données 18.

De préférence, le capteur d'efforts multiaxes 20 est placé entre l'extrémité du bras de robot 4 et l'effecteur 6. De préférence, le capteur d'efforts multiaxes 20 est constitué d'au moins 6 dispositifs de mesures, par exemple des jauges de contraintes piezo-résistives solidaires d'un corps d'épreuve. L'agencement géométrique des dispositifs, non nécessairement aligné sur un repère cartésien canonique, permet de reconstruire le torseur d'effort complet par combinaison linéaire des mesures qu'il produit. Le capteur d'efforts multiaxes 20 est configuré pour fournir les efforts extérieurs multidimensionnels $F_s$.

Dans certaines variantes, toutefois, les efforts extérieurs exercés sur le bras de robot pourraient être déterminés par la mesure des courants des actionneurs. La fonction du capteur d'efforts multiaxes 20 pourrait alors être remplacée par un module d'analyse implémenté de façon électronique par le système de commande 8.

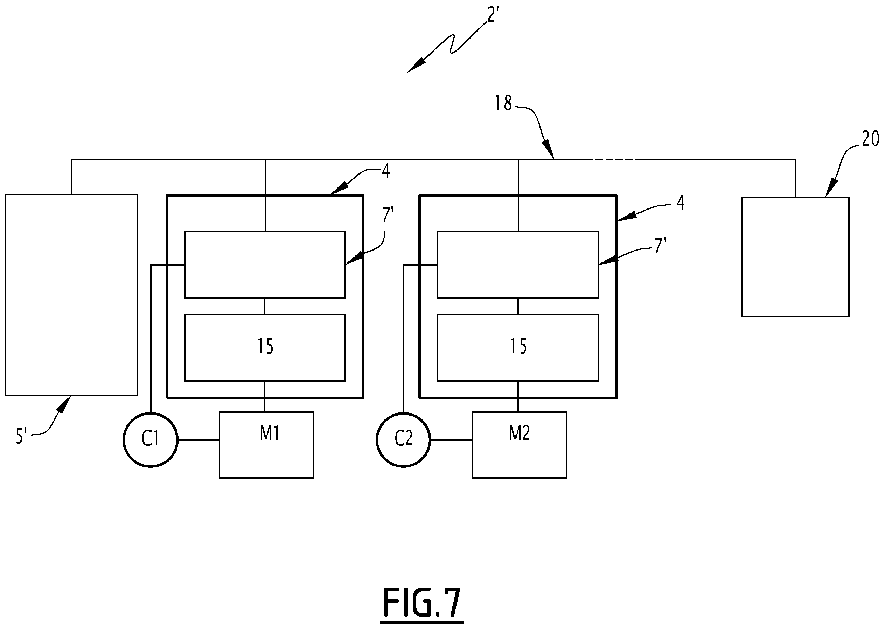

Dans un deuxième mode de réalisation, partiellement illustré sur la figure 7 en référence à un robot industriel 2' analogue au robot industriel 2, le système de commande 8 comporte une unité centrale 5' et 6 amplificateurs 4. L'unité centrale 5' est en communication avec les amplificateurs 4 par une liaison de données tel qu'un bus de données 18, notamment un bus de terrain.

Chaque amplificateur 4 est connectée à un seul des actionneurs M1 à M6 et à un seul des capteurs C1 à C6 (en l'occurrence, au capteur qui est associé audit actionneur). Chaque amplificateur 4 comporte une unité auxiliaire 7' et une unité de puissance 15. Chaque amplificateur 4 est ainsi connectée à l'actionneur M1 à M6 correspondant par l'intermédiaire d'une unité de puissance 15 telle que décrit précédemment.

Pour simplifier la figure 7, seuls les deux premiers amplificateurs 4 sont illustrés, en étant respectivement associées aux actionneurs M1 et M2 et aux capteurs C1 et C2.

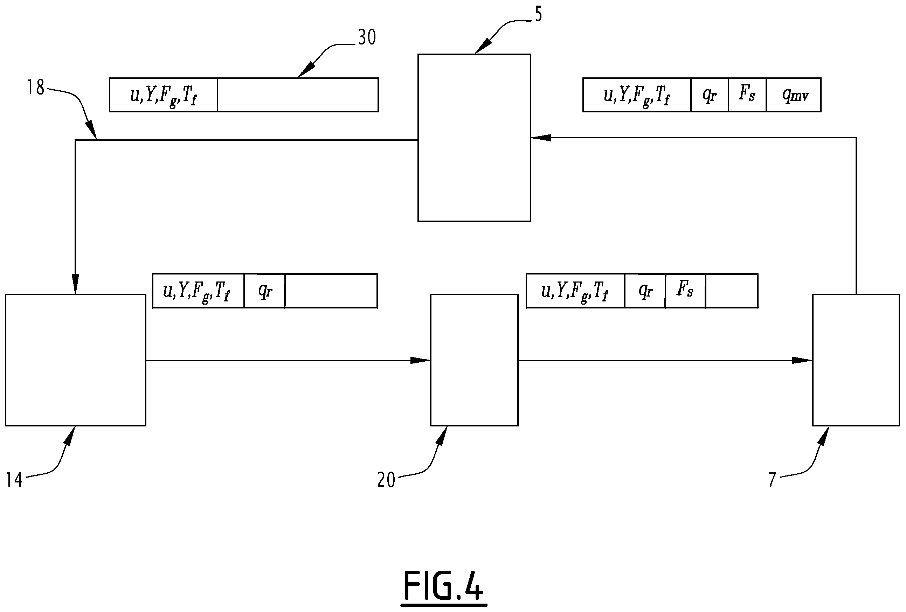

Dans les différents modes de réalisation, comme illustré sur l'exemple de la figure 4, le bus de données 18 permet aux différents équipements tels que l'unité centrale, les unités auxiliaires, l'interface d'acquisition de données 14, voire le capteur d'efforts multiaxes 20, de communiquer en faisant circuler des trames de données 30 envoyées de façon synchrone ou cyclique.

De préférence, la communication est réalisée de façon unidirectionnelle mais en permettant une communication croisée (cross-communication en anglais).

Par exemple, l'unité centrale agit comme « maître » sur le bus de données et les autres équipements connectés agissent comme « esclaves ». Ces équipements « esclaves » peuvent lire les données contenues dans chaque trame de données, et ajouter des données dans la trame de données lors du passage de celle-ci, la trame de données étant remontée à l'unité centrale en fin de chaque cycle de communication.

Comme illustré sur la figure 4 et pour le premier mode de réalisation, l'unité centrale 5 émet une trame de données 30 qui parvient en premier à l'interface d'acquisition de données 14. L'interface d'acquisition de données 14 complète la trame de données 30 avec des données comme par exemple les positions articulaires $q_r$ des actionneurs M1 à M6. La trame de données parvient ensuite au capteur d'efforts multiaxes 20. Le capteur d'efforts multiaxes 20 complète la trame de données avec les efforts extérieurs multidimensionnels $F_s$ mesurés. La trame de données 30 parvient ensuite à l'unité auxiliaire 7 qui peut lire les positions articulaires $q_r$ des actionneurs électriques M1 à M6 et les efforts extérieurs multidimensionnels $F_s$ mesurés qui viennent d'être écrits dans la trame de données 30. La trame de données 30 parvient ensuite à l'unité centrale 5 qui peut lire les positions articulaires $q_r$ des actionneurs électriques M1 à M6 et les efforts extérieurs multidimensionnels $F_s$ mesurés. En variante, l'unité centrale 5 peut mettre en oeuvre des communications cycliques à des fréquences différentes. Certaines trames de données 30 émises à haute fréquence peuvent être dédiées à la communication des positions articulaires $q_r$ des actionneurs électriques M1 à M6 alors que certaines trames de données 30 émises à une fréquence plus basse peuvent être dédiées à la communication des efforts extérieurs multidimensionnels $F_s$ mesurés.

Un tel fonctionnement est particulièrement avantageux dans les processus de communication compatibles avec le protocole EtherCAT (EtherCAT Automation Protocol).

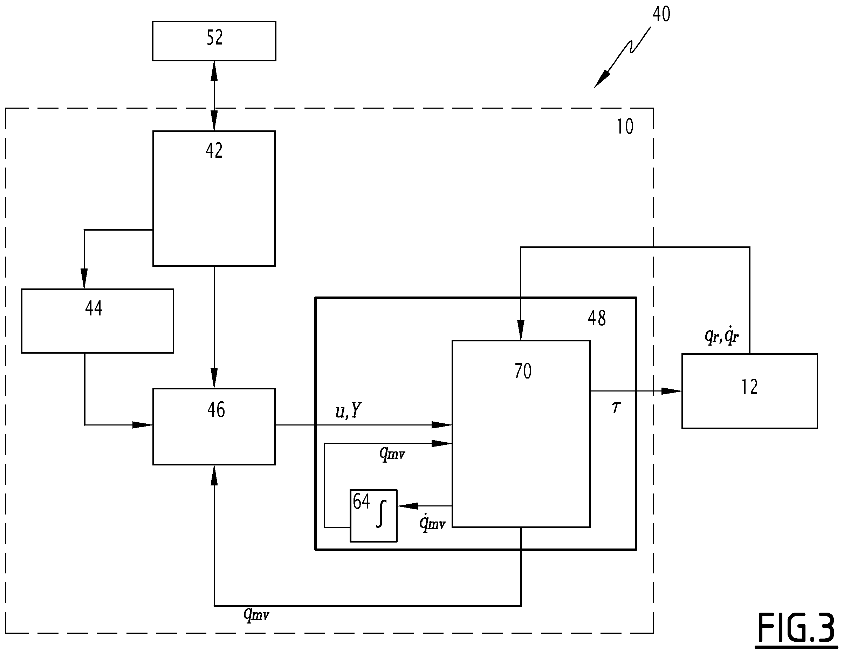

La figure 3 précise la façon dont le robot 2 est piloté par le système de commande 8. Sur la figure 3, des fonctions de pilotage du robot 2 sont représentés par un schéma bloc simplifié 40, seules les fonctions essentielles à la compréhension de l'invention étant illustrées et décrites en détail.

Le système de commande 8 implémente un module d'exécution de programme applicatif (module 42), un générateur de trajectoire (module 44) et un gestionnaire d'impédance (module 46).

Le module d'exécution de programme applicatif 42 adresse des instructions au générateur de trajectoire 44, par exemple sous la forme de commandes asynchrones.

Le module d'exécution de programme applicatif 42 permet également de sélectionner le mode de fonctionnement approprié pour le gestionnaire d'impédance 46. Par exemple, on peut choisir un mode de fonctionnement en pilotage en effort, ou un mode de fonctionnement en pilotage en position, ou un mode de fonctionnement hybride mêlant pilotage en effort et pilotage en position ou un mode de fonctionnement en pilotage en impédance.

Le module d'exécution de programme applicatif 42 peut aussi renvoyer des informations d'état à un utilisateur.

Le générateur de trajectoire 44 reçoit des instructions de haut niveau (par exemple, une instruction de se déplacer en ligne droite à une destination donnée dans l'espace) et transforme ces instructions en une succession de positions articulaires ou de positions cartésiennes par exemple en appliquant un modèle cinématique associée au bras de robot 4 et, le cas échéant, en tenant compte de contraintes mécaniques telles que des réductions et des couplages mécaniques éventuels.

Le générateur de trajectoire 44 peut aussi, de manière similaire, générer des trajectoires d'effort (comme un effort dans une direction donnée passant progressivement d'une valeur à une autre). De préférence, les trajectoires de position et d'effort sont synchronisés.

Le gestionnaire d'impédance 46 génère les commandes articulaires de manière à conférer au robot un comportement défini, par exemple pour suivre une trajectoire dans l'espace cartésien.

Ces commandes sont de préférence générées en utilisant une information de mode de fonctionnement fournie par le module d'exécution de programme applicatif 42, mais aussi et surtout en fonction de consignes de mouvement (telles que des positions et des vitesses) et/ou des consignes d'effort synchrones, et en fonction d'une quantité, notée $q_{mv}$, qui sera décrite plus en détail dans ce qui suit.

Par exemple, les commandes articulaires générées par le gestionnaire d'impédance 46 comportent une consigne composite d'effort et/ou de vitesse, notée « u », et une matrice de comportement, notée Y. Par exemple, Y est une matrice carrée de dimension n, et u est un vecteur de dimension n, n étant le nombre d'actionneurs du robot. La matrice de comportement Y décrit un comportement désiré du bras de robot, en définissant des directions dans lesquelles la consigne composite u doit s'appliquer. Les coefficients de la matrice de comportement Y peuvent être des fonctions dépendant du temps. De même, les consignes composites u peuvent dépendre du temps.

En variante, les consignes composites u pourraient être séparées en deux variables distinctes : une consigne de vitesse d'une part et une consigne d'effort d'autre part. Toutefois, les regrouper en une seule variable permet de limiter les échanges de données entre composants dans l'implémentation physique.

Dans cette description, le terme « impédance » est utilisé pour désigner l'impédance mécanique du bras de robot 4. En effet, un des buts du procédé de commande est de contrôler le comportement et la réponse du bras de robot 4 lorsqu'il est soumis à des efforts extérieurs, par exemple lorsqu'il rencontre un obstacle ou lorsqu'un utilisateur exerce un effort manuel sur le bras de robot (par exemple pour guider manuellement le robot).

L'impédance mécanique du robot caractérise la réponse du bras de robot 4 à un effort mécanique extérieur. Une impédance nulle (ou quasi-nulle) signifie que le robot se déplace librement dès qu'on tente d'appliquer un effort sur lui. Une impédance infinie (ou très grande) signifie que le bras de robot reste immobile quel que soit l'effort extérieur appliqué. L'impédance du robot peut être choisie différemment pour différentes directions de l'espace, par exemple en sélectionnant une impédance très grande dans certaines directions et faible dans d'autres directions.

De façon générale, le système de commande 8 du robot est configuré pour calculer la consigne composite u dépendant du temps et définissant des efforts et des vitesses articulaires, en fonction d'une trajectoire cible et d'un mode de fonctionnement choisi, et pour calculer la matrice de comportement Y qui décrit un comportement désiré du bras de robot, en définissant des directions dans lesquelles la consigne composite u calculée doit s'appliquer. Ce calcul est répété de façon cyclique.

Le système de commande 8 comporte également un régulateur d'impédance articulaire (module 48) qui reçoit la consigne composite u et la matrice de comportement Y générées par le gestionnaire d'impédance 46, ainsi que la position et la vitesse articulaire du robot (respectivement notées $q_r$ et $\dot{q}_r$) obtenues à partir des capteurs C1 à C6.

A partir de ces informations, le régulateur d'impédance articulaire 48 est configuré pour générer les consignes d'effort articulaire (notées « $\tau$ ») pour que le robot suive le comportement défini par la consigne composite u et la matrice de comportement Y générées par le gestionnaire d'impédance 46. En plus, le régulateur d'impédance articulaire 48 génère et/ou met à jour la quantité $q_{mv}$, qui correspond à un état interne assimilable à une consigne de position articulaire interne et virtuelle, mais différente de la position articulaire effective $q_r$, qui sera utilisée à des fins de calcul.

Le système de commande 8 comporte enfin un module de régulation d'axe 12.

Ce module de régulation d'axe 12 met en oeuvre une ou plusieurs boucles de régulation qui pilotent les actionneurs pour que les efforts appliqués suivent la consigne d'effort articulaire $\tau$ reçue depuis le régulateur d'impédance articulaire 48. Le module de régulation d'axe 12 comprend des boucles d'effort et de vitesse 61 qui assurent la régulation d'effort et de vitesse et génèrent les consignes de pilotage des boucles de courant $\tau_{cmd}$ qui peuvent prendre en compte des compensations de gravité du bras de robot 4 et de l'effecteur 6. La vitesse articulaire $\dot{q}_r$ est par exemple obtenue par dérivation numérique de la position $q_r$ du robot. En pratique, la position et la vitesse articulaire du robot ($q_r$ et $\dot{q}_r$) ainsi que tous les efforts articulaires peuvent se présenter sous la forme de vecteurs dont les coefficients correspondent aux différentes articulations ou actionneurs.

En résumé, le système de commande du robot est ainsi configuré pour calculer une consigne d'effort articulaire $\tau$ de pilotage des modules de régulation d'axe et de la dérivée temporelle $\dot{q}_{mv}$ d'un état interne $q_{mv}$, homogène à une position articulaire mais distinct de la position articulaire $q_r$, ce calcul étant réalisé en fonction de ladite consigne composite u précédemment calculée, de ladite matrice de comportement Y précédemment calculée, des positions articulaires $q_r$ mesurées, des vitesses articulaires $\dot{q}_r$ dérivées à partir des positions articulaires mesurées $q_r$, et de l'état interne $q_{mv}$.

Le robot 2 comporte avantageusement une interface homme machine 52 (IHM) qui permet d'acquérir des commandes et des instructions venant d'un utilisateur et d'afficher ou envoyer des informations à l'utilisateur, telles que des informations sur l'état interne du robot 2 et/ou sur des paramètres de fonctionnement.

Le système de commande 8 du robot implémente un module de calcul 10 qui incorpore les fonctions des modules 42, 44, 46 et 48. Le module de calcul 10 est apte à générer les consignes d'effort articulaire $\tau$ de pilotage d'un module de régulation d'axe 12. Ce module de régulation d'axe 12 est apte à calculer les consignes de pilotage d'unités de puissance 15 qui délivrent un courant électrique approprié aux moteurs M1 à M6.

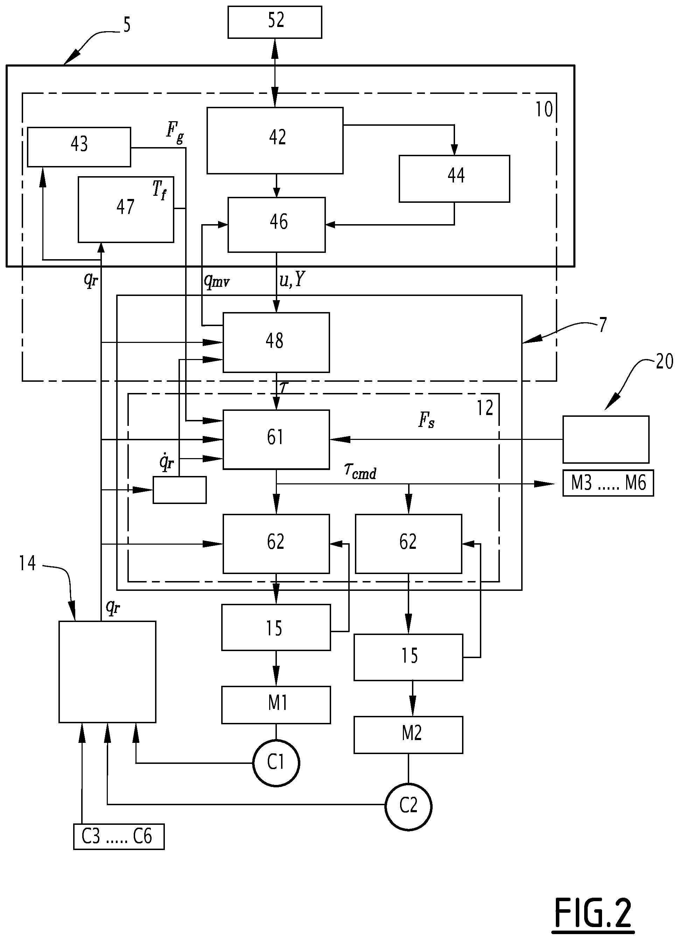

Pour le premier mode de réalisation, la figure 2 permet de décrire comment le module de calcul 10 et le module de régulation d'axe 12 sont implémentés. L'unité centrale 5 et l'unité auxiliaire 7 comportent chacune au moins un processeur, tel qu'un microcontrôleur programmable ou un microprocesseur, qui est couplé à une mémoire informatique qui comporte des instructions exécutables et/ou un code logiciel prévu pour mettre en oeuvre un procédé de commande du robot lorsque ces instructions sont exécutées par le processeur. L'unité centrale 5 est apte à opérer les fonctions des modules 42, 44 et 46. L'unité centrale 5 communique à l'unité auxiliaire 7 la consigne composite u et la matrice de comportement Y par le bus de données 18. L'unité auxiliaire 7 est apte à opérer les fonctions du module 48 c'est à dire du régulateur d'impédance articulaire qui calcule les consignes d'effort articulaire $\tau$ et les transmet au module de régulation d'axe 12 qui met en oeuvre des boucles de régulation d'effort et de vitesse 61 et des boucles de régulation de courant 62. L'unité auxiliaire 7 est également apte à opérer les fonctions du module de régulation d'axe 12. L'unité auxiliaire 7 est connectée aux 6 unités de puissance 15 et leur transmet ainsi les consignes de pilotage d'unité de puissance. Pour la clarté de la figure 2, seules deux des six unités de puissance 15 sont représentées.

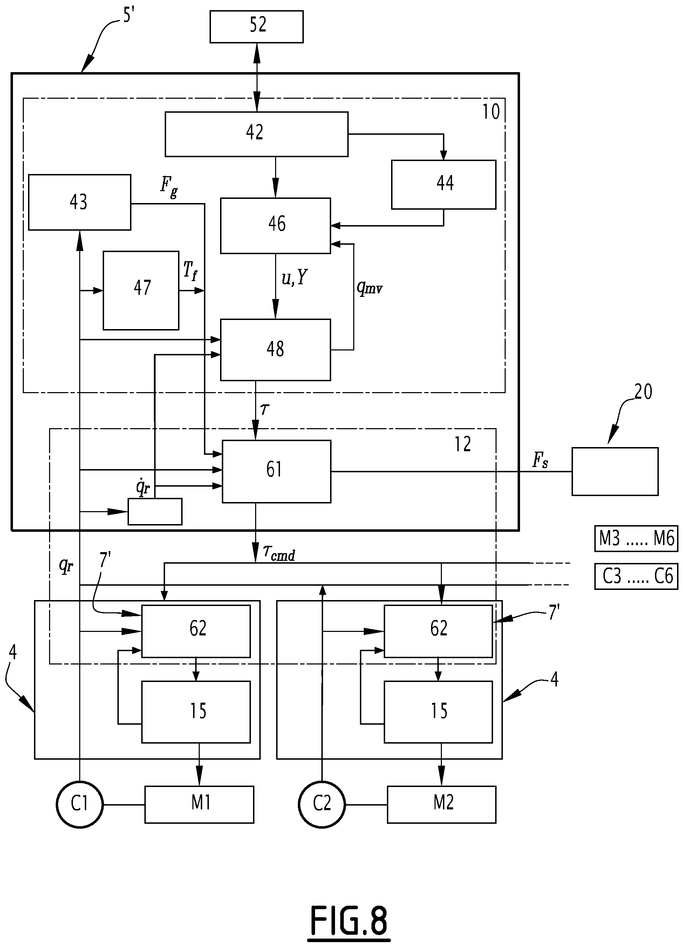

Pour le deuxième mode de réalisation, la figure 8 permet de décrire comment le module de calcul 10 et le module de régulation d'axe 12 sont implémentés. L'unité centrale 5' et les unités auxiliaires 7' comportent chacune au moins un processeur, tel qu'un microcontrôleur programmable ou un microprocesseur, qui est couplé à une mémoire informatique qui comporte des instructions exécutables et/ou un code logiciel prévu pour mettre en oeuvre un procédé de commande du robot lorsque ces instructions sont exécutées par le processeur. L'unité centrale 5' est apte à opérer les fonctions des modules 42, 44, 46, 48 et 61. A la différence du premier mode de réalisation, elle opère les fonctions du module 48 c'est à dire du régulateur d'impédance articulaire qui calcule les consignes d'effort articulaire $\tau$. L'unité centrale 5' communique aux unités auxiliaires 7' les consignes de pilotage des boucles de courants $\tau_{cmd}$ par le bus de données 18. Les unités auxiliaires 7' sont aptes à mettre en oeuvre des boucles de régulation de courant 62. Chaque amplificateur 4 comporte une unité auxiliaire 7' et une unité de puissance 15. Il est assimilable à un amplificateur d'axe disponible dans le commerce. Dans ce deuxième mode, le module de régulation d'axe 12 est implémenté dans les unités auxiliaires 7' et partiellement dans l'unité centrale 5' qui met en oeuvre des boucles d'effort et de vitesse 61.

Dans les deux modes de réalisation, l'asservissement en effort articulaire peut être implémenté par le module de régulation d'axe 12 suivant des stratégies de régulation courantes bien connues, qui ne sont pas décrites plus en détail, l'essentiel étant que les efforts exercés sur chacune des articulations du robot respectent bien la consigne en effort articulaire $\tau$ calculée.

En pratique, on peut avantageusement utiliser un asservissement en effort du robot basé sur un asservissement en courant de chacun des actionneurs M1 à M6, cet asservissement en courant étant réalisé par la boucle de courant 62, pour chaque actionneur M1 à M6, en fonction de l'information de position angulaire qui est issue du capteur C1 à C6 associé à cet actionneur M1 à M6 et de la mesure des courants des unités de puissance 15.

Dans de nombreux cas, l'asservissement en effort réalisé par la boucle d'effort et de vitesse 61 peut également comporter une correction visant à compenser la gravité du bras de robot et les frottements, la correction des frottements étant calculée pour chaque articulation à partir de la vitesse de rotation déterminée pour cette articulation, la gravité étant calculée pour chaque articulation à partir de la position angulaire et du modèle dynamique du bras de robot 4.

Dans certains cas, lorsque le capteur d'efforts multiaxes 20 est utilisé, une correction peut être apportée à la stratégie d'asservissement en fonction des forces et/ou des couples mesurés par le capteur d'efforts multiaxes 20. Différentes stratégies de correction peuvent être mises en oeuvre selon qu'un capteur d'effort est monté à l'extrémité du bras de robot, ou selon que plusieurs capteurs d'efforts sont associés aux articulations respectives du bras de robot 4.

Lorsqu'un capteur d'efforts multiaxes 20 est placé entre l'extrémité du bras de robot et l'effecteur 6, le module de calcul 10 comporte alors un compensateur de gravité 43 qui calcule le poids de l'effecteur $F_g$. Le poids de l'effecteur $F_g$ est un vecteur représentant le torseur d'effort du poids de l'effecteur 6, exprimé dans le repère du capteur d'efforts multiaxes 20. Il est calculé à partir des paramètres de l'outil porté par le robot (masse, position du centre de gravité), du modèle géométrique du bras du robot et des positions articulaires mesurées $q_r$. Le poids de l'effecteur $F_g$ est soustrait à la mesure du capteur d'efforts multiaxes 20 au niveau des boucles d'effort et de vitesse 61 pour ne pas prendre en compte le poids de l'effecteur dans la commande, mais uniquement les efforts exercés sur l'effecteur 6. Le module de calcul 10 comporte également un convertisseur cartésien articulaire 47 qui calcule la matrice de conversion articulaire $T_f$. La matrice de conversion articulaire $T_f$ est la matrice qui permet de convertir les efforts extérieurs multidimensionnels $F_s$ qui sont exprimés dans l'espace cartésien en données exprimées dans l'espace articulaire. $T_f = J_f^T T_c$, où $J_f$ est la matrice jacobienne du robot reliant la vitesse cartésienne du centre du capteur d'efforts multiaxes 20 aux vitesses articulaires du robot 2 et $T_c$ est une matrice qui permet de transformer les mesures du capteur d'efforts multiaxes 20, initialement exprimées dans les coordonnées du capteur d'efforts multiaxes, pour les exprimer dans le système de coordonnées de la base du robot. $J_f$ et $T_c$ sont calculés à partir des positions articulaires $q_r$.

La matrice de conversion articulaire $T_f$ et le poids de l'effecteur $F_g$ sont transmis aux boucles d'effort et de vitesse 61.

Dans le premier mode de réalisation et comme illustré à la figure 4, La matrice de conversion articulaire $T_f$ et le poids de l'effecteur $F_g$ sont transmis aux boucles d'effort et de vitesse 61 par l'intermédiaire d'une trame de données 30 qui est issue de l'unité centrale 5 qui implémente le compensateur de gravité 43 et le convertisseur cartésien articulaire 47. Les boucles d'effort et de vitesse 61 sont implémentées par l'unité auxiliaire 7.

Dans le calcul des consignes de pilotage des boucles de courants $\tau_{cmd}$, les boucles d'effort et de vitesse 61 calculent le vecteur des efforts articulaires $\tau_s$ en soustrayant le poids de l'effecteur $F_g$ aux efforts extérieurs multidimensionnels $F_s$ pour ne pas tenir compte du poids de l'effecteur et en appliquant la matrice de conversion articulaire $T_f$ au résultat pour le convertir dans le domaine articulaire, comme donné dans la formule suivante :

[Math 1]

$$\tau_s = T_f(F_s - F_g)$$

En alternative, les boucles d'effort et de vitesse 61 peuvent d'abord appliquer la matrice de conversion articulaire $T_f$ au poids de l'effecteur $F_g$ et aux efforts extérieurs multidimensionnels $F_s$ puis effectuer la soustraction.

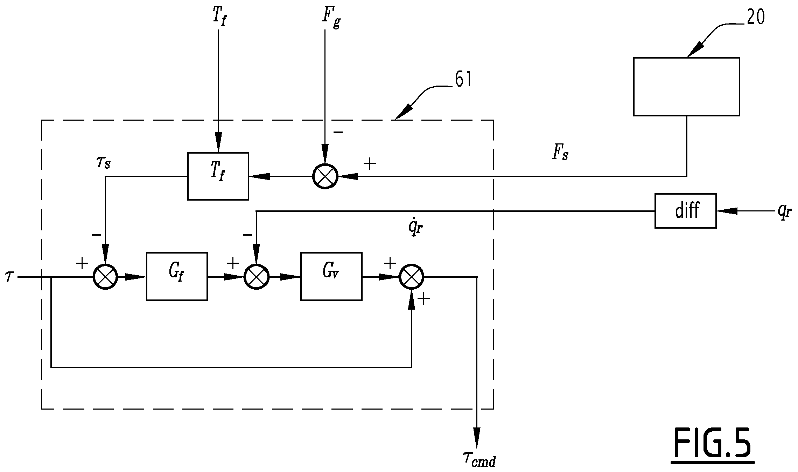

Selon une implémentation avantageuse illustrée sur la figure 5, la correction des consignes d'effort articulaire $\tau$, en présence d'un capteur d'efforts multiaxes 20, peut être réalisée en associant une compensation de la gravité avec deux correcteurs d'effort et de vitesse, respectivement notés $G_f$ et $G_v$ qui corrigent les consignes d'effort articulaires fournies au bras de robot 4. Par exemple, le correcteur d'effort $G_f$ est un régulateur de type intégral, et le correcteur de vitesse $G_v$ est de type proportionnel.

Dans le premier mode de réalisation de l'invention, le compensateur de gravité 43 et le convertisseur cartésien articulaire 47 sont implémentés dans l'unité centrale 5. La matrice de conversion articulaire $T_f$ et le poids de l'effecteur $F_g$ sont transmis par le bus de liaison 18 aux boucles d'effort et de vitesse 61 qui sont implémentées dans l'unité auxiliaire 7.

Cette implémentation est avantageuse car elle permet que tous les calculs implémentés dans l'unité auxiliaire 7 sont réalisés en coordonnées articulaires. Ces calculs sont relativement simples (contrairement aux calculs faits dans les modules 43, 47, et 46). Cela permet au régulateur d'impédance 48 et aux boucles d'effort et de vitesse 61 d'être calculés à une fréquence plus importante. Par ailleurs, beaucoup de solutions connues nécessitent de remonter l'effort mesuré par le capteur d'efforts multiaxes 20 vers l'unité centrale pour que celle-ci calcule des consignes de position, de vitesse ou d'effort, qui sont destinés au contrôle des actionneurs, occasionnant ainsi plus de retard dans la boucle de régulation d'effort, ce qui se traduit par une précision moindre et par de moindres performances lorsque le robot doit être guidé manuellement au moins en partie.

Comme illustré sur la figure 3, le régulateur d'impédance articulaire 48 comprend un module de résolution 70 et un module d'intégration 64. Le module de résolution 70 est configuré pour calculer les consignes d'effort articulaire $\tau$ et pour transmettre les consignes d'effort articulaire $\tau$ calculées au module de régulation d'axe 12. Ce calcul est réalisé en fonction de la consigne composite u précédemment calculée, de la matrice de comportement Y précédemment calculée, des positions articulaires $q_r$ mesurées, des vitesses articulaires $\dot{q}_r$ dérivées à partir des positions articulaires mesurées $q_r$ et de l'état interne $q_{mv}$ précédemment calculé.

En particulier, la consigne d'effort articulaire $\tau$ servant à piloter le module de régulation d'axe 12 est calculée à partir d'une fonction de régulation qui régule l'écart entre la position articulaire $q_r$ et l'état interne $q_{mv}$ (précédemment défini en référence au régulateur d'impédance articulaire 48).

Le module de résolution 70 calcule la dérivée $\dot{q}_{mv}$ de l'état interne en fonction de la consigne composite u précédemment calculée, de la matrice de comportement Y précédemment calculée, de la position articulaire $q_r$, de la vitesses articulaires $\dot{q}_r$ et de l'état interne $q_{mv}$ précédemment calculé. Le module d'intégration 64 détermine l'état interne $q_{mv}$ par intégration de la dérivée temporelle $\dot{q}_{mv}$ de l'état interne. Par exemple, le module de résolution 70 utilise la valeur de l'état interne $q_{mv}$ déjà connue à partir d'un cycle de calcul précédent et stockée en mémoire.

De préférence, la fonction de régulation est un régulateur proportionnel, dérivée et intégral (régulateur PID).

Avantageusement, la consigne d'effort articulaire $\tau$ et la dérivée temporelle $\dot{q}_{mv}$ de l'état interne sont des solutions du système d'équations différentielles suivant :

[Math 2]

$$\begin{cases} \dot{q}_{mv} = u - Y\left(K_p(q_{mv} - q_r) + K_i \int (q_{mv} - q_r)dt - K_d\dot{q}_r\right) \\ \tau = K_p(q_{mv} - q_r) + K_i \int (q_{mv} - q_r)dt + K_d(\dot{q}_{mv} - \dot{q}_r) \end{cases}$$

où $q_{mv}$ est la fonction correspondant audit état interne, $\dot{q}_{mv}$ est la dérivée temporelle de l'état interne $q_{mv}$, $\tau$ est la consigne d'effort articulaire, ici présentées sous forme de vecteur, Y est la matrice de comportement et u est ladite consigne composite.

Dans ces équations, Kp, Ki, et Kd sont des matrices de gains. En pratique, les gains Kp, Ki, et Kd sont les gains utilisés pour paramétrer le régulateur PID. Par exemple, Kp, Ki, et Kd correspondent respectivement aux gains proportionnel, intégral et dérivé. Kp et Ki peuvent éventuellement être des matrices nulles.

Par exemple, dans ce système, la seconde équation réalise un asservissement de type proportionnel intégral dérivé (PID) de la position articulaire du robot $q_r$ sur la position $q_{mv}$. La première équation définit l'évolution de la position virtuelle représentée par l'état interne $q_{mv}$.

Selon un premier exemple d'implémentation, le contrôle d'impédance articulaire peut être réalisé par un régulateur satisfaisant au système d'équations suivant :

[Math 3]

$$\begin{cases} \gamma = K_p(q_{mv} - q_r) + K_i \int (q_{mv} - q_r)dt - K_d\dot{q}_r \\ \dot{q}_{mv} = u - Y\gamma \\ \tau = \gamma + K_d\dot{q}_{mv} \end{cases}$$

où $\gamma$ est une variable intermédiaire utilisée pour calculer la matrice de comportement Y, cette variable intermédiaire $\gamma$ étant calculée à partir de l'état interne $q_{mv}$, de la position articulaire $q_r$ et de la vitesse articulaire $\dot{q}_r$.

La première implémentation du régulateur d'impédance est particulièrement avantageuse dans le cadre du premier mode de réalisation (Figures 1 et 2) car la matrice de comportement Y est symétrique, de sorte que seule une partie des coefficients a besoin d'être transmise sur le bus de données 18, ce qui réduit encore plus le temps de calcul.

Selon un deuxième exemple d'implémentation, le contrôle d'impédance articulaire peut être réalisé par un régulateur satisfaisant au système d'équations suivant :

[Math 4]

$$\begin{cases} \gamma = \left(K_p(q_{mv} - q_r) + K_i \int (q_{mv} - q_r)dt\right) - K_d\dot{q}_r \\ \dot{q}_{mv} = u + K_d^{-1}(P - I)\gamma \\ \tau = P\gamma + K_d u \end{cases}$$

où $\gamma$ est la variable intermédiaire précédemment décrite, et P est une matrice de comportement analogue à la matrice de comportement Y, la matrice P étant définie à partir de la matrice Y au moyen de la formule suivante :

[Math 5]

$$Y = K_d^{-1}(I - P)$$

dans laquelle « I » représente la matrice identité.

Dans les deux implémentations du régulateur d'impédance, on peut utiliser d'autres types d'asservissement qu'un asservissement de type PID. Par exemple, on peut également définir la variable intermédiaire $\gamma$ de la manière suivante, qui correspond à l'application d'un filtre numérique et sur l'écart entre la position articulaire $q_r$ et l'état interne $q_{mv}$ :

[Math 6]

$$\gamma = e_f - K_d\dot{q}_r$$

dans lequel le filtre est donné par la formule suivante :

[Math 7]

$$e_f = F(p)(q_{mv} - q_r)$$

où F(p) représente une transformation de Laplace et « p » est la variable de Laplace.

On décrit maintenant des exemples de fonctionnement de cette régulation d'impédance articulaire dans différents modes de fonctionnement du robot 2.

Dans un premier mode de fonctionnement, le robot 2 fonctionne en pilotage automatique. Le bras de robot 4 est asservi en position et doit suivre la trajectoire articulaire générée (par exemple générée par le module 44) indépendamment des efforts extérieurs exercés sur le bras de robot 4. Par exemple, la trajectoire est définie par une position articulaire $q_d$ dépendante du temps et sa dérivée $\dot{q}_d$.

Dans ce cas, le gestionnaire d'impédance 48 définit une matrice de comportement Y nulle, c'est-à-dire que les coefficients de la matrice de comportement Y sont tous nuls. Alternativement, cela correspond à définir P égale à la matrice identité dans la seconde implémentation du régulateur d'impédance décrite ci-dessus.

Le gestionnaire d'impédance 48 impose également que la consigne composite u soit de la forme suivante :

[Math 8]

$$u = \dot{q}_d + \frac{1}{T}(q_d - q_{mv})$$

où le paramètre T est une constante de temps qui présente une valeur strictement positive.

Dans ce cas, le système d'équations différentielles auquel satisfait le système de commande peut se réécrire de la façon suivante :

[Math 9]

$$\begin{cases} (q_d - q_{mv}) + T(\dot{q}_{mv} - \dot{q}_d) = 0 \\ \tau = K_p(q_{mv} - q_r) + K_i \int (q_{mv} - q_r)dt + K_d(\dot{q}_{mv} - \dot{q}_r) \end{cases}$$

Ainsi, la position angulaire $q_r$ est asservie sur la position virtuelle $q_{mv}$ et va suivre la trajectoire définie par la position articulaire $q_d$ après un régime transitoire dont la durée est déterminée par la constante de temps T, et avec une précision qui dépendra des valeurs choisies pour les gains $K_p$, $K_i$ et $K_d$.

L'état interne $q_{mv}$ suit les consignes de vitesse définies dans la consigne composite u dans toutes les directions articulaires.

Dans un deuxième mode de fonctionnement, le robot 2 fonctionne en pilotage en effort. Par exemple, on peut vouloir piloter les efforts articulaires du robot pour qu'ils suivent une consigne articulaire prédéterminée $\tau_d$ fournie par le générateur de trajectoire 44. Si la consigne est spécifiée par un torseur d'effort $f_d$ appliqué en un point du robot, alors la consigne articulaire équivalente est donnée par la formule suivante :

[Math 10]

$$\tau_d = J^T f_d$$

où J désigne la matrice jacobienne du robot correspondant au point d'application de l'effort et l'exposant « T » désigne la transposée de la matrice.

Un tel mode de fonctionnement est par exemple utile lorsque l'on souhaite laisser le bras de robot libre pour permettre à un utilisateur de piloter le bras de robot entièrement par un simple déplacement manuel.

Dans ce cas, le gestionnaire d'impédance 46 définit la matrice de comportement $Y = K_d^{-1}$ (ou, de manière équivalente, P = 0, pour la seconde implémentation du régulateur d'impédance) et la consigne composite $u = K_d^{-1}\tau_d$.

Le système d'équations différentielles auquel satisfait le système de commande peut se réécrire de la façon suivante :

[Math 11]

$$\begin{cases} K_d(\dot{q}_{mv} - \dot{q}_r) + K_p(q_{mv} - q_r) + K_i \int (q_r - q_{mv})dt = \tau_d \\ \tau = \tau_d \end{cases}$$

En pratique, la première équation implique que l'écart entre l'état interne $q_{mv}$ et la position angulaire $q_r$ converge vers zéro lorsque la consigne articulaire prédéterminée $\tau_d$ est constante.

En pratique, les gains du régulateur PID ont des valeurs suffisamment élevées pour se permettre d'approximer que l'état interne $q_{mv}$ soit égale à la position angulaire réelle $q_r$ même quand la consigne articulaire prédéterminée $\tau_d$ n'est pas constante. En d'autres termes, l'état interne $q_{mv}$ suit les positions articulaires $q_r$ mesurées du bras de robot 4 dans toutes les directions articulaires.

La seconde équation montre que la consigne d'effort articulaire transmise au bras de robot 4 correspond bien à la consigne articulaire prédéterminée $\tau_d$, indépendamment de la position du bras de robot 4.

Dans un troisième mode de fonctionnement, le robot 2 fonctionne dans un mode hybride combinant à la fois un pilotage en effort et un pilotage en position. Le bras de robot 4 doit suivre une trajectoire prédéfinie, tout en appliquant des efforts contrôlés dans certaines directions.

Un tel mode de fonctionnement est par exemple utile lorsque l'on souhaite pouvoir guider le bras de robot à la main (« handguiding » en anglais) tout en suivant une trajectoire prédéfinie. Cela permet notamment de bloquer certains degrés de libertés du bras de robot 4, par exemple :

- en autorisant uniquement un guidage manuel du bras de robot 4 en translation ou en rotation,
- ou en bloquant l'extrémité du bras de robot 4 à une position fixe tout en libérant l'articulation des segments du bras de robot,
- ou alternativement en laissant l'extrémité du bras de robot 4 libre mais en bloquant tout ou partie des articulations du bras de robot 4.

Par exemple, pour effectuer un tel blocage, tout ou partie des actionneurs M1 à M6 exercent un effort qui s'oppose à l'effort manuel exercé par l'utilisateur.

Un tel mode de fonctionnement peut aussi être utile lorsque le robot est utilisé dans un procédé industriel de façonnage d'une pièce mécanique à l'aide d'un effecteur 6 porté par le bras de robot 4, au cours duquel l'effecteur 6 entre en contact direct avec la pièce mécanique, par exemple lors d'opérations de ponçage, ou d'ébavurage, ou d'assemblage, ou de suivi de contour de la pièce, et bien d'autres exemples encore.

Un tel mode de fonctionnement peut enfin être utile lorsque l'on pilote le bras de robot à distance avec un retour d'effort, ou encore lorsque plusieurs robots industriels doivent collaborer pour manipuler un même objet, par exemple lors d'un procédé de fabrication d'une pièce mécanique.

Un premier exemple du mode de fonctionnement hybride peut concerner un fonctionnement avec une contrainte de type « rotule », dans lequel on souhaite que l'extrémité du robot reste en un point $(x_d, y_d, z_d)$ donné, l'orientation étant libre. Par ailleurs, on veut pouvoir déplacer librement l'orientation de l'extrémité du bras de robot, et donc les moments $(m_x, m_y, m_z)$ autour du point de rotation doivent rester nuls.

Dans ce cas, le gestionnaire d'impédance 46 calcule la matrice de comportement Y et la consigne composite u de la manière suivante :

[Math 12]

$$c = \begin{pmatrix} x(q_{mv}) - x_d \\ y(q_{mv}) - y_d \\ z(q_{mv}) - z_d \end{pmatrix}, \; G_f = J_{mv}^T \begin{pmatrix} 1 & 0 & 0 \\ 0 & 1 & 0 \\ 0 & 0 & 1 \\ 0 & 0 & 0 \\ 0 & 0 & 0 \\ 0 & 0 & 0 \end{pmatrix}, \; Y = K_d^{-1} - K_d^{-1} G_f \left( G_f^T K_d^{-1} G_f \right)^{-1} G_f^T K_d^{-1}$$

(ou $P = G_f\left(G_f^T K_d^{-1} G_f\right)^{-1} G_f^T K_d^{-1}$ pour la deuxième implémentation)

$$u = -\frac{1}{T} K_d^{-1} G_f \left(G_f^T K_d^{-1} G_f\right)^{-1} c$$

où $J_{mv}$ désigne la matrice jacobienne du robot calculée à partir de l'état interne $q_{mv}$ et $\begin{pmatrix} x(q_{mv}) \\ y(q_{mv}) \\ z(q_{mv}) \end{pmatrix}$ est la position cartésienne correspondant à l'état interne $q_{mv}$.

L'état interne $q_{mv}$ suit les positions articulaires $q_r$ mesurées dans toutes les directions commandées en effort définies par la matrice de comportement Y, c'est-à-dire dans les directions correspondant au changement d'orientation de l'extrémité du robot. D'autre part, l'état interne $q_{mv}$ suit les consignes de vitesse définies dans la consigne composite u dans les directions commandées en vitesse définies par la matrice de comportement Y, c'est-à-dire dans les directions correspondant à la translation de l'extrémité du robot.

Un deuxième exemple du mode de fonctionnement hybride est maintenant décrit. Dans ce mode de fonctionnement, le robot suit une trajectoire dans un plan (x,y), avec une orientation fixe. Dans la direction z orthogonale au plan (x,y), le robot applique un effort variable en fonction du temps. Ce mode de fonctionnement hybride peut être utile, par exemple, pour réaliser le ponçage d'une surface, par exemple dans un fonctionnement entièrement automatique.

Dans ce deuxième mode de fonctionnement hybride, le générateur de trajectoire 44 génère les consignes $x_d(t)$ et $y_d(t)$, qui définissent la trajectoire souhaitée dans le plan (x,y), ainsi que la valeur $f_{z,d}(t)$ de l'effort souhaité dans la direction z, et les transmet au gestionnaire d'impédance 46.

Le gestionnaire d'impédance 46 calcule la matrice de comportement Y et la consigne composite u de la façon suivante :

[Math 13]

$$c = \begin{pmatrix} x(q_{mv}) - x_d(t) \\ y(q_{mv}) - y_d(t) \\ r_x(q_{mv}) \\ r_y(q_{mv}) \\ r_z(q_{mv}) \end{pmatrix}, \quad G_f = J_{mv}^T \begin{pmatrix} 1 & 0 & 0 & 0 & 0 \\ 0 & 1 & 0 & 0 & 0 \\ 0 & 0 & 0 & 0 & 0 \\ 0 & 0 & 1 & 0 & 0 \\ 0 & 0 & 0 & 1 & 0 \\ 0 & 0 & 0 & 0 & 1 \end{pmatrix},$$

$$Y = K_d^{-1} - K_d^{-1} G_f \left(G_f^T K_d^{-1} G_f\right)^{-1} G_f^T K_d^{-1}$$

(ou $P = G_f\left(G_f^T K_d^{-1} G_f\right)^{-1} G_f^T K_d^{-1}$ pour la deuxième implémentation)

$$u = K_d^{-1} G_f \left(G_f^T K_d^{-1} G_f\right)^{-1} \left( \begin{pmatrix} \dot{x}_d(t) \\ \dot{y}_d(t) \\ 0 \\ 0 \\ 0 \end{pmatrix} - \frac{1}{T} c \right) + Y J_{mv}^T \begin{pmatrix} 0 \\ 0 \\ f_{z,d}(t) \\ 0 \\ 0 \\ 0 \end{pmatrix}$$

où $J_{mv}$ désigne la matrice jacobienne du robot calculée à partir de l'état interne $q_{mv}$, $x(q_{mv})$ et $y(q_{mv})$ sont les coordonnées dans le plan (x,y) de la position cartésienne de l'organe terminal correspondant à l'état interne $q_{mv}$, et $r_x(q_{mv})$, $r_y(q_{mv})$, $r_z(q_{mv})$ représentent les coordonnées angulaires de l'organe terminal, correspondant à l'état interne $q_{mv}$.

L'état interne $q_{mv}$ suit les positions articulaires $q_r$ mesurées dans toutes les directions commandées en effort définies par la matrice de comportement Y, c'est-à-dire dans la direction articulaire correspondant à la direction z. D'autre part, l'état interne $q_{mv}$ suit les consignes de vitesse définies dans la consigne composite u dans les directions commandées en vitesse définies par la matrice de comportement Y, c'est-à-dire dans toutes les autres directions articulaires.

Dans les trois modes de fonctionnement décrits, l'état interne $q_{mv}$ suit les positions articulaires $q_r$ mesurées dans les directions commandées en effort définies par la matrice de comportement Y et suit les consignes de vitesse définies dans la consigne composite u dans les directions commandées en vitesse définies par la matrice de comportement Y.

Dans un quatrième mode de fonctionnement de type « commande en impédance », le robot doit se comporter comme s'il était relié à un point suivant une trajectoire $p_d$ au moyen d'un ressort $K_{cart}$ et d'un amortissement $B_{cart}$. Le vecteur $p_d$ contient les coordonnées cartésiennes (position et orientation) de la trajectoire. La vitesse associée est notée $v_d$.

Dans ce cas, le gestionnaire d'impédance 46 calcule la matrice de comportement Y et la consigne composite u de la façon suivante :

[Math 14]

$$u = (K_d + J_{mv}^T B_{cart} J_{mv})^{-1} J_{mv}^T (K_{cart}(xp_d - p_{mv}) + B_{cart} v_d)$$

$$Y = (K_d + J_{mv}^T B_{cart} J_{mv})^{-1}$$

dans lequel $xp_{mv}$ est un vecteur des coordonnées cartésiennes (position et orientation) calculé à partir de l'état interne $q_{mv}$ et du modèle géométrique du robot. Par exemple, les caractéristiques du ressort $K_{cart}$ et de l'amortissement $B_{cart}$ sont ici données sous forme de matrices.

Pour tous les modes de fonctionnement décrits, le gestionnaire d'impédance 46 génère la matrice de comportement Y et la consigne composite u suivant les commandes reçues du Module d'exécution de programme applicatif 42 et du générateur de trajectoire 44.

De retour aux figures 1, 2 et 3, on décrit maintenant des aspects de l'implémentation de la régulation d'impédance par le système de commande 8.

Comme expliqué précédemment, le module d'exécution du programme applicatif 42, le générateur de trajectoire 44 et le gestionnaire d'impédance 46 sont avantageusement implémentés par l'unité centrale 5.

Le régulateur d'impédance articulaire 48 et le module de régulation d'axe 12 sont de préférence implémentés par l'unité auxiliaire 7.

En variante, et notamment dans le cas où des amplificateurs sont utilisés, par exemple comme dans l'implémentation des figures 7 et 8, alors le régulateur d'impédance articulaire 48 et les boucles d'effort et de vitesse 61 sont implémentés par l'unité centrale 5'.

Les calculs nécessaires pour mettre en oeuvre la régulation d'impédance sont réalisés périodiquement au cours du temps.

De façon particulièrement avantageuse, l'unité centrale 5 est configurée pour recalculer périodiquement la consigne composite u et la matrice de comportement Y avec une première fréquence de calcul, notée F1.

Les consignes d'effort articulaire $\tau$ sont recalculées périodiquement avec une deuxième fréquence de calcul, notée F2, qui est supérieure à la première fréquence F1.

Par exemple, la deuxième fréquence F2 est entre deux et vingt fois plus élevée que la première fréquence F1. De préférence, la deuxième fréquence F2 est entre cinq et dix fois plus élevée que la première fréquence F1. De préférence encore, la deuxième fréquence F2 est huit fois plus élevée que la première fréquence F1.

Cela est particulièrement avantageux lorsque le régulateur d'impédance articulaire 48 est implémenté par l'unité auxiliaire 7.

En effet, le régulateur d'impédance articulaire 48 n'a besoin de mettre en oeuvre qu'un nombre relativement limité d'opérations arithmétiques simples. Il peut donc fonctionner à haute fréquence. Cela permet d'avoir des gains Kp, Ki et Kd élevés, ce qui permet d'obtenir une bonne raideur et une bonne précision dans les directions commandées en position. Les calculs géométriques plus complexes sont implémentés dans l'unité centrale 5.

Par ailleurs, implémenter la régulation d'impédance dans l'unité auxiliaire 7 séparément de l'unité centrale 5 procure un gain de performance car un seul processeur pilote alors les différents actionneurs M1 à M6. En étant au plus près des capteurs et des actionneurs, cela permet d'avoir des retards réduits dans les asservissements, et donc d'obtenir au final des performances supérieures. Implémenter la régulation d'impédance et le module de régulation d'axe 12 dans un seul processeur de l'unité auxiliaire 7 augmente les performances car il n'y a pas de retard de communication.

Selon un exemple donné à des fins d'illustration, les consignes composites u et les matrices de comportement Y sont calculées par l'unité centrale 5 et transférées à l'unité auxiliaire 7 toutes les millisecondes, soit avec une fréquence de 1000Hz. Chacune des composantes de ces commandes sont ensuite interpolées linéairement pour obtenir des valeurs pour chacun des cycles de calcul réalisés avec la deuxième fréquence F2, par exemple avec une fréquence de 8kHz.

Plus généralement, un autre aspect avantageux de la mise en oeuvre de l'invention réside dans le fait que la boucle d'asservissement et l'intégration de l'état interne $q_{mv}$ sont toutes les deux réalisées dans les coordonnées articulaires. Cela évite d'avoir à mettre en oeuvre des transformations géométriques coûteuses en ressources de calcul. Réduire le temps nécessaire pour effectuer les calculs liés à la régulation d'impédance lors de chaque cycle de calcul permet là aussi d'avoir des gains Kp, Ki, Kd plus élevés, et donc d'obtenir une meilleure précision, notamment dans les directions commandées en position.

Le procédé de régulation d'impédance permet de fonctionner efficacement quel que soit le mode de fonctionnement choisi, que le robot fonctionne en mode de pilotage en effort, ou en mode de pilotage en position, ou en le mode hybride, ou en mode de pilotage en impédance. Les valeurs des coefficients de gain Kp, Ki et Kd peuvent être réglées une fois pour toutes, indépendamment du mode de fonctionnement.

Grâce à l'invention, le guidage du robot est amélioré lorsque le robot doit être guidé manuellement au moins partiellement.

Certains modes de réalisation peuvent être mis en oeuvre indépendamment des autres modes de réalisation.

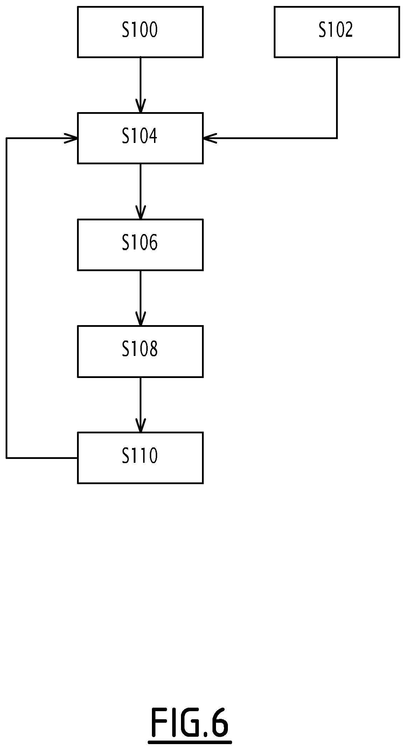

La figure 6 représente un exemple d'implémentation d'un procédé de fonctionnement conforme à l'invention. En variante, les étapes pourraient être exécutées dans un ordre différent. Certaines étapes pourraient être omises. L'exemple décrit ne fait pas obstacle à ce que, dans d'autres modes de réalisation, d'autres étapes soient mises en oeuvre conjointement et/ou séquentiellement avec les étapes décrites.

Le procédé débute à l'étape S100 par exemple avec le lancement d'un programme de pilotage du robot, notamment dans un mode de pilotage en effort ou hybride. Au cours de cette étape, selon le mode de fonctionnement choisi, une trajectoire peut être acquise ou définie par le système de commande 8.

En parallèle, un utilisateur peut, lors d'une étape S102, manipuler le bras de robot 4 pour imposer manuellement un effort ou un déplacement.

Lors d'une étape S104, le système de commande 8 calcule la consigne composite u définissant des efforts et des vitesses articulaires, en fonction de la trajectoire cible et du mode de fonctionnement.

Lors d'une étape S106, le système de commande 8 calcule la matrice de comportement Y en fonction du mode de fonctionnement.

Lors d'une étape S108, le système de commande 8 calcule la consigne d'effort articulaire $\tau$ et la dérivée temporelle $\dot{q}_{mv}$ dudit état interne $q_{mv}$, ce calcul étant réalisé en fonction de ladite consigne composite u précédemment calculée, de la matrice de comportement Y précédemment calculée, des positions articulaires $q_r$ mesurées, de vitesses articulaires $\dot{q}_r$ dérivées à partir des positions articulaires mesurées et de l'état interne précédemment calculé.

Comme exprimé précédemment, la consigne d'effort articulaire $\tau$ de pilotage des modules de régulation d'axe 12 est calculée à partir d'une fonction de régulation qui régule l'écart entre la position articulaire $q_r$ et l'état interne $q_{mv}$, l'état interne étant déterminé par intégration de ladite dérivée temporelle $\dot{q}_{mv}$ de l'état interne $q_{mv}$.

A l'étape S110, le système de commande 8 calcule les consignes de pilotage des unités de puissance 15 en fonction de la consigne d'effort articulaire $\tau$.

Avantageusement, lors du calcul des consignes de pilotage des unités de puissance 15, il est tenu compte d'un effort extérieur appliqué au robot, par exemple par un utilisateur exerçant manuellement un effort sur le bras de robot 4.

L'invention a été décrite avec un bras de robot articulé suivant des rotations. Elle est applicable à un robot comportant des membres en translation l'un par rapport à l'autre le long d'un ou plusieurs axes de mouvement.

Les modes de réalisation et les variantes envisagés ci-dessus peuvent être combinés entre eux pour créer de nouveaux modes de réalisation.

**Revendications**

1. Procédé de commande d'un robot industriel (2), le robot comportant :

   ▪ un bras de robot multiaxes (4) comprenant au moins deux actionneurs électriques (M1, ..., M6) chacun capable de déplacer une partie du bras de robot par rapport à une autre partie du bras de robot autour ou le long d'un axe de mouvement, chaque actionneur électrique étant associé à un capteur (C1, ..., C6) configuré pour mesurer une position articulaire ($q_r$) de l'actionneur correspondant,
   ▪ un système de commande (8) de robot comportant des modules de régulation d'axe (12) configurés pour calculer les consignes de pilotage d'unités de puissance (15) qui délivrent un courant électrique approprié aux actionneurs (M1, ..., M6) en fonction d'une consigne d'effort articulaire ($\tau$), et un module de calcul (10) configuré pour déterminer des consignes d'effort articulaires ($\tau$) pour les modules de régulation d'axe, le module de calcul étant raccordé aux modules de régulation d'axe,

dans lequel le procédé de commande comporte des étapes consistant à :

- calculer (S104) une consigne composite (u) dépendant du temps et définissant des efforts et/ou des vitesses articulaires, en fonction d'une trajectoire cible et d'un mode de fonctionnement,
- calculer (S106) une matrice de comportement (Y) qui décrit un comportement désiré du bras de robot, en définissant des directions dans lesquelles la consigne composite (u) calculée doit s'appliquer, la matrice de comportement (Y) étant exprimée dans l'espace articulaire,
- calculer (S108) une consigne d'effort articulaire ($\tau$) de pilotage des modules de régulation d'axe et calculer une dérivée temporelle ($\dot{q}_{mv}$) d'un état interne ($q_{mv}$) homogène à une position articulaire et distinct des positions articulaires mesurées ($q_r$) , le calcul de la consigne d'effort articulaire ($\tau$) de pilotage des modules de régulation d'axe et le calcul de la dérivée temporelle ($\dot{q}_{mv}$) étant chacun réalisé en fonction de ladite consigne composite (u) précédemment calculée, de ladite matrice de comportement (Y) précédemment calculée, des positions articulaires ($q_r$) mesurées, de vitesses articulaires ($\dot{q}_r$) dérivées à partir des positions articulaires mesurées ($q_r$), et de l'état interne ($q_{mv}$) précédemment calculé,

dans lequel la consigne d'effort articulaire ($\tau$) de pilotage des modules de régulation d'axe est calculée à partir d'une fonction de régulation qui régule un écart entre la position articulaire ($q_r$) et l'état interne ($q_{mv}$), l'état interne étant déterminé par intégration de ladite dérivée temporelle ($\dot{q}_{mv}$) de l'état interne.

2. Procédé de commande selon la revendication 1, dans lequel la fonction de régulation est un régulateur proportionnel, dérivée et intégral.

3. Procédé de commande selon la revendication 2, dans lequel la consigne d'effort articulaire ($\tau$) et la dérivée temporelle ($\dot{q}_{mv}$) de l'état interne sont des solutions du système d'équations différentielles suivant :

$$\begin{cases} \dot{q}_{mv} = u - Y\left(K_p(q_{mv} - q_r) + K_i \int (q_{mv} - q_r)dt - K_d\dot{q}_r\right) \\ \tau = K_p(q_{mv} - q_r) + K_i \int (q_{mv} - q_r)dt + K_d(\dot{q}_{mv} - \dot{q}_r) \end{cases}$$

où $q_{mv}$ est la fonction correspondant audit état interne, $\dot{q}_{mv}$ est la dérivée temporelle de l'état interne $q_{mv}$, $\tau$ est la consigne d'effort articulaire, Y est la matrice de comportement et u est ladite consigne composite, et où Kp, Ki, et Kd sont des matrices de gains.

4. Procédé de commande selon l'une quelconque des revendications précédentes, dans lequel les actionneurs électriques comportent des moteurs électriques sans balais et dans lequel les modules de régulation d'axe sont configurés pour calculer le courant d'alimentation des actionneurs en fonction de leur position articulaire mesurée par le capteur correspondant.

5. Procédé de commande selon l'une quelconque des revendications 1 à 4, dans lequel le module de régulation d'axe (12) prend en compte des efforts extérieurs multidimensionnels ($F_s$) mesurés par un capteur d'efforts multiaxes (20) pour calculer les consignes de pilotage d'unités de puissance (15).

6. Procédé de commande selon la revendication 5, le robot comportant un effecteur (6) placé à l'extrémité du bras de robot, dans lequel le module de calcul (10) comporte un compensateur de gravité (43) qui calcule le poids de l'effecteur ($F_g$) et un convertisseur cartésien articulaire (47) qui calcule la matrice de conversion articulaire ( $T_f$) à partir des positions articulaires ($q_r$) et transmet le poids de l'effecteur ($F_g$) et la matrice de conversion articulaire ( $T_f$) au module de régulation d'axe (12) pour la prise en compte des efforts extérieurs multidimensionnels ($F_s$) mesurés par un capteur d'efforts multiaxes (20) monté en extrémité du bras de robot (4) .

7. Procédé de commande selon l'une quelconque des revendications précédentes, dans lequel le module de calcul (10) calcule la consigne composite (u) et la matrice de comportement (Y) avec une première fréquence (F1) et calcule les consignes d'effort articulaire ($\tau$) de pilotage des modules de régulation d'axe (12) avec une deuxième fréquence (F2) supérieure à la première fréquence.

**8.** Procédé de commande selon la revendication 7, dans lequel la deuxième fréquence (F2) est entre deux et vingt fois plus élevée que la première fréquence (F1), de préférence entre cinq et dix fois plus élevée que la première fréquence (F1), de préférence encore huit fois plus élevée que la première fréquence (F1).

**9.** Procédé de commande selon la revendication 6 et l'une des revendications 7 ou 8, dans lequel le module de calcul (10) comporte un compensateur de gravité (43) qui calcule le poids de l'effecteur ($F_g$) et un convertisseur cartésien articulaire qui calcule la matrice de conversion articulaire ($T_f$) à partir des positions articulaires ($q_r$) et transmet le poids de l'effecteur ($F_g$) et la matrice de conversion articulaire ($T_f$) au module de régulation d'axe (12) pour la prise en compte des efforts extérieurs multidimensionnels ($F_s$) par un capteur d'efforts multiaxes (20) monté en extrémité du bras de robot (4) à la première fréquence (F1).

**10.** Procédé de commande selon l'une quelconque des revendications 1 à 9, dans lequel une unité centrale (5) implémente le calcul de la consigne composite (u) et la matrice de comportement (Y) et dans lequel une unité auxiliaire (7) implémente le calcul des consignes d'effort articulaires ($\tau$) et le module de régulation d'axe (12), l'unité centrale et l'unité auxiliaire (12) étant en communication au moyen d'un bus de données (18).

**11.** Procédé de commande selon l'une quelconque des revendications 1 à 9, dans lequel les actionneurs électriques comportent des moteurs électriques sans balais et dans lequel une unité centrale (5') implémente le calcul de la consigne composite (u) et la matrice de comportement (Y), le calcul des consignes d'effort articulaires ($\tau$) et le calcul de consignes de pilotage des boucles de courant ($\tau_{cmd}$) par des boucles d'effort et de vitesse (61) et une pluralité d'amplificateurs (4) en communication avec l'unité centrale est apte à alimenter en courant les moteurs en fonction consignes de pilotage des boucles de courant ($\tau_{cmd}$).

**12.** Procédé de commande selon l'une des revendications 1 à 11, dans lequel le calcul de la consigne composite (u) et de la matrice de comportement (Y) prend en compte l'état interne ($q_{mv}$).

**13.** Système de commande d'un robot industriel (2), le robot comportant :

- un bras de robot multiaxes (4) comprenant au moins deux actionneurs électriques (M1, ..., M6) chacun capable de déplacer une partie du bras de robot par rapport à une autre partie du bras de robot autour ou le long d'un axe de mouvement, chaque actionneur électrique étant associé à un capteur (C1, ..., C6) configuré pour mesurer une position articulaire ($q_r$) de l'actionneur correspondant,
- le système de commande (8) de robot comportant des modules de régulation d'axe (12) configurés pour calculer les consignes de pilotage d'unités de puissance (15) qui délivrent un courant électrique approprié aux actionneurs (M1, ..., M6) en fonction d'une consigne d'effort articulaire ($\tau$), et un module de calcul (10) configuré pour déterminer des consignes d'effort articulaires ($\tau$) pour les modules de régulation d'axe, le module de calcul étant raccordé aux modules de régulation d'axe,

le système de commande comportant des modules configurés pour :

- calculer une consigne composite (u) dépendant du temps et définissant des efforts et/ou des vitesses articulaires, en fonction d'une trajectoire cible et d'un mode de fonctionnement,
- calculer une matrice de comportement (Y) qui décrit un comportement désiré du bras de robot, en définissant des directions dans lesquelles la consigne composite (u) calculée doit s'appliquer, la matrice de comportement (Y) étant exprimée dans l'espace articulaire,
- calculer une consigne d'effort articulaire ($\tau$) de pilotage des modules de régulation d'axe et calculer une dérivée temporelle ($\dot{q}_{mv}$) d'un état interne ($q_{mv}$) homogène à une position articulaire et distinct des positions articulaires mesurées ($q_r$), le calcul de la consigne d'effort articulaire ($\tau$) de pilotage des modules de régulation d'axe et le calcul de la dérivée temporelle ($\dot{q}_{mv}$) étant chacun réalisé en fonction de ladite consigne composite (u) précédemment calculée, de ladite matrice de comportement (Y) précédemment calculée, des positions articulaires ($q_r$) mesurées, de vitesses articulaires ($\dot{q}_r$) dérivées à partir des positions articulaires mesurées ($q_r$), et de l'état interne ($q_{mv}$) précédemment calculé,

dans lequel la consigne d'effort articulaire ($\tau$) de pilotage des modules de régulation d'axe est calculée à partir d'une fonction de régulation qui régule un écart entre la position articulaire ($q_r$) et l'état interne ($q_{mv}$), l'état interne étant déterminé par intégration de ladite dérivée temporelle ($\dot{q}_{mv}$) de l'état interne.

**14.** Robot industriel comportant un système de commande selon la revendication 13 et apte à mettre en oeuvre un procédé de commande selon une des revendications 1 à 12.

<u>FIG.1</u>

$$\underline{FIG.2}$$

FIG.3

**FIG.4**

22

FIG.5

```
┌──────────┐              ┌──────────┐
│   S100   │              │   S102   │
└────┬─────┘              └─────┬────┘
     │                          │
     ▼                          │
┌──────────┐                    │
│   S104   │◄───────────────────┘
└────┬─────┘
     │
     ▼
┌──────────┐
│   S106   │
└────┬─────┘
     │
     ▼
┌──────────┐
│   S108   │
└────┬─────┘
     │
     ▼
┌──────────┐
│   S110   │
└──────────┘
```

# FIG.6

**FIG.7**

## FIG.8

Europäisches
Patentamt

European
Patent Office

Office européen
des brevets

**RAPPORT DE RECHERCHE EUROPEENNE**

Numéro de la demande

**EP 23 16 3922**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MAGRINI EMANUELE ET AL: "Hybrid force/velocity control for physical human-robot collaboration tasks", 2016 IEEE/RSJ INTERNATIONAL CONFERENCE ON INTELLIGENT ROBOTS AND SYSTEMS (IROS), IEEE, 9 octobre 2016 (2016-10-09), pages 857-863, XP033011501, DOI: 10.1109/IROS.2016.7759151 * page 857 - page 861 * | 1-14 | INV. B25J9/16 |
| A | GÜNTER SCHREIBER ET AL: "The Fast Research Interface for the KUKA Lightweight Robot", ICRA 2010 WORKSHOP ON INNOVATIVE ROBOT CONTROL ARCHITECTURES FOR DEMANDING (RESEARCH) APPLICATIONS, 3 mai 2010 (2010-05-03), pages 15-21, XP055614534, * le document en entier * | 1-14 | |
| A | M. H. RAIBERT ET AL: "Hybrid Position/Force Control of Manipulators", JOURNAL OF DYNAMIC SYSTEMS, MEASUREMENT AND CONTROL, vol. 103, no. 2, 1 janvier 1981 (1981-01-01), pages 126-133, XP055309892, US ISSN: 0022-0434, DOI: 10.1115/1.3139652 * le document en entier * -/-- | 1,13 | **DOMAINES TECHNIQUES RECHERCHES (IPC)** G05B |

Le présent rapport a été établi pour toutes les revendications

| Lieu de la recherche | Date d'achèvement de la recherche | Examinateur |
|---|---|---|
| La Haye | 16 août 2023 | De Santis, Agostino |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

## RAPPORT DE RECHERCHE EUROPEENNE

Numéro de la demande

**EP 23 16 3922**

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Bruno Siciliano ET AL: "Chapter 9 – Force Control – Robotics Modelling Planning and Control" In: "Robotics Modelling Planning and Control", 23 décembre 2009 (2009-12-23), Springer, XP055660304, pages 363-406, * le document en entier * ----- | 1-13 | |
| A | NATALE C ET AL: "Robust hybrid force/position control with experiments on an industrial robot", ADVANCED INTELLIGENT MECHATRONICS, 1999. PROCEEDINGS. 1999 IEEE/ASME I NTERNATIONAL CONFERENCE ON ATLANTA, GA, USA 19-23 SEPT. 1999, IEEE, PISCATAWAY, NJ, USA, 19 septembre 1999 (1999-09-19), pages 956-960, XP010356720, DOI: 10.1109/AIM.1999.803301 ISBN: 978-0-7803-5038-0 * le document en entier * ----- | 1,13 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| La Haye | 16 août 2023 | De Santis, Agostino |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

.................................................................

& : membre de la même famille, document correspondant

EPO FORM 1503 03.82 (P04C02)

**page 2 de 2**